# EUROPEAN PATENT APPLICATION

(11) **EP 2 610 696 A1**
(43) Date of publication of application: **03.07.2013**
(21) Application number: 11819534.6
(22) Date of filing: 17.06.2011
(51) Int. Cl.: G05B 19/418, G06Q 50/00

(54) **PROCESS DESIGN/PRODUCTION PLANNING DEVICE**

(30) Priority: 27.08.2010 JP 2010190248
(71) Applicant: Hitachi, Ltd., Chiyoda-ku Tokyo 100-8280 (JP)
(72) Inventor: NAKANO, Takahiro, Yokohama-shi Kanagawa 244-0817 (JP); NONAKA, Yoichi, Yokohama-shi Kanagawa 244-0817 (JP); ISHIBASHI, Hisaya, Yokohama-shi Kanagawa 244-0817 (JP)
(74) Representative: Calderbank, Thomas Roger
(86) International application number: PCT/JP2011/003456
(87) International publication number: WO 2012/026056

(57) **Abstract**

A process design and production scheduling device is provided for users to equalize the load on the processing machine, attain the target production figure, and meet deadlines specified required by the customer. The present invention creates production schedules for the entire machining production line; and also assigns product machining processes to multiple machining devices in the machining process, and creates process designs and production schedules in processing units. The above device renders a process design and production scheduling system, and also a process design and production scheduling device capable of creating production schedules to equalize the load on the processing machine, attain the target production figure and meet deadlines specified by customers.

## Description

### TECHNICAL FIELD

The present invention relates to production scheduling technology for creating scheduling for the production line, and to the CAM (Computer Aided Manufacturing) technical field for setting machining operations on numerical control (NC) machine tools.

In order to manufacture a product on a machine tool production line, the tools are selected, processing machines are selected, machining conditions are established, process designs are made from work drawings of the product for manufacture by utilizing CAM, and NC (numerical control) data created for controlling NC machines. Moreover, a schedule is drawn up from the required time for the product in each process, and the machining time approximately calculated from the process design by using production scheduling technology to achieve the product quantity and the product deadline. After drawing up the job task scheduling and personnel scheduling for periods within the schedule, NC data is written for NC machine tools, the product members and tools are procured, and the production starts.

The Patent No. 2828526 for example disclosed technology for sending the process design data to the production scheduling system and creating an NC program after attaining the required line balance.

### SUMMARY

When machining free curved surfaces such as on impellers for example, 5-axis processing machines are often utilized for machining processes ranging from rough machining up to finish machining. However, the load on the machines can be equalized by allotting 3-axis processing machines to rough processing and 5-axis processing machines to finish machining. In the technology of the related art however, a product machining operation is established for each processing machine and product, and NC data is made so that the load is concentrated in designated processing machines and therefore causes production delays and pileups occur which leads to a drop in productivity as well as delays in meeting the deadline specified by the customer.

In order to address the aforementioned problems, an aspect of the present invention includes a section that selects tools, selects processing machines, establishes machining conditions, and designs process designs from the product drawings; a section that calculates the machining time for each process from the process design and removal volume; and a section that draws up scheduling from the machining time, product deadline, process production capacity, and the machining processing time.

Another aspect of the present invention includes a section that draws up the production scheduling in machining process units by distributing each designed machining process for the product to multiple processing machines.

Still another aspect of the present invention includes a section that calculates the deadline delay, and the load on each process and processing machine for the production schedule which was drawn up, and outputs that calculated information.

Yet another aspect of the present invention includes a section that makes the process designs and production planning required by the user, by allowing the user to evaluate the deadline delay and load from each process and each processing machine, and resetting a process assignment technique for the process design and a schedule drafting section used for drawing up the schedule.

Still another aspect of the present invention is also a computer program for making a process design and production schedule.

Yet another aspect of the present invention is also a storage medium that stores the computer program.

According to the aspects of the present invention, it is possible to provide the user with a process design and production scheduling system and a process design and production scheduling device capable of equalizing the load on the processing machine, attaining the target production quantity, and meeting deadlines specified by the customer.

### BRIEF DESCRIPTION OF THE DRAWINGS

FIG. 1 is a concept drawing of the process design and production scheduling system of the first embodiment of the present invention;
FIG. 2 is a concept drawing of the process design and production scheduling device of the first embodiment of the present invention;
FIG. 3 is a drawing showing the incoming order information in the first embodiment of the present invention;
FIG. 4 is a drawing showing the machining shape information in the first embodiment of the present invention;
FIG. 5 is a drawing showing the product process information in the first embodiment of the present invention;
FIG. 6 is a drawing showing personnel information in the first embodiment of the present invention;
FIG. 7 is a drawing showing production line information in the first embodiment of the present invention;
FIG. 8 is a drawing showing processing machine information in the first embodiment of the present invention;
FIG. 9 is a drawing showing record information in the first embodiment of the present invention;
FIG. 10 is a drawing showing machining pattern information in the first embodiment of the present invention;
FIG. 11 is a drawing showing rule information in the first embodiment of the present invention;
FIG. 12 is a drawing showing rule information in the first embodiment of the present invention;
FIG. 13 is a drawing showing the hardware structure in the first embodiment of the present invention;
FIG. 14 is a drawing showing the flow for creating the process design and production scheduling in the first embodiment of the present invention;
FIG. 15 a drawing showing the output results for the work process day in the first embodiment of the present invention;
FIG. 16 is a drawing of the Gantt chart output results in the first embodiment of the present invention;
FIG. 17 is the process assignment output results in the first embodiment of the present invention;
FIG. 18 is the deadline delay output results in the first embodiment of the present invention;
FIG. 19 is a drawing showing the machining process design flow in the first embodiment of the present invention;
FIG. 20 is a drawing showing the flow for making the production scheduling in the first embodiment of the present invention;
FIG. 21 is a drawing showing the flow for making the production scheduling of the machining process in the first embodiment of the present invention;
FIG. 22 is a drawing showing the flow for making the production schedule for processes other than the machining process in the first embodiment of the present invention;
FIG. 23 is a drawing showing the process flow for implementing the machining process assignment in the first embodiment of the present invention; and
FIG. 24 is a drawing showing the process flow for drawing up the production scheduling in the machining process in the first embodiment of the present invention.

### DETAILED DESCRIPTION

The first embodiment of the present invention is described next.

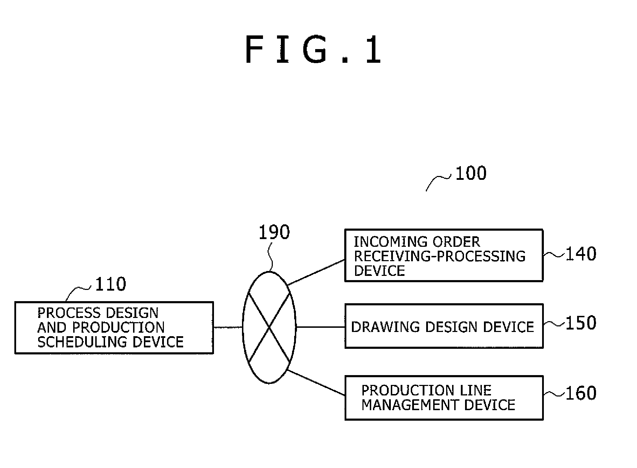

FIG. 1 is a concept drawing of the process design and production scheduling system 100 of the first embodiment of the present invention. As shown in the figure, the process design and production scheduling system includes a process design and production scheduling device 110, an incoming order receiving-processing device 140, a drawing design device 150, and a production line management device 160 which mutually exchange information by way of a network 190.

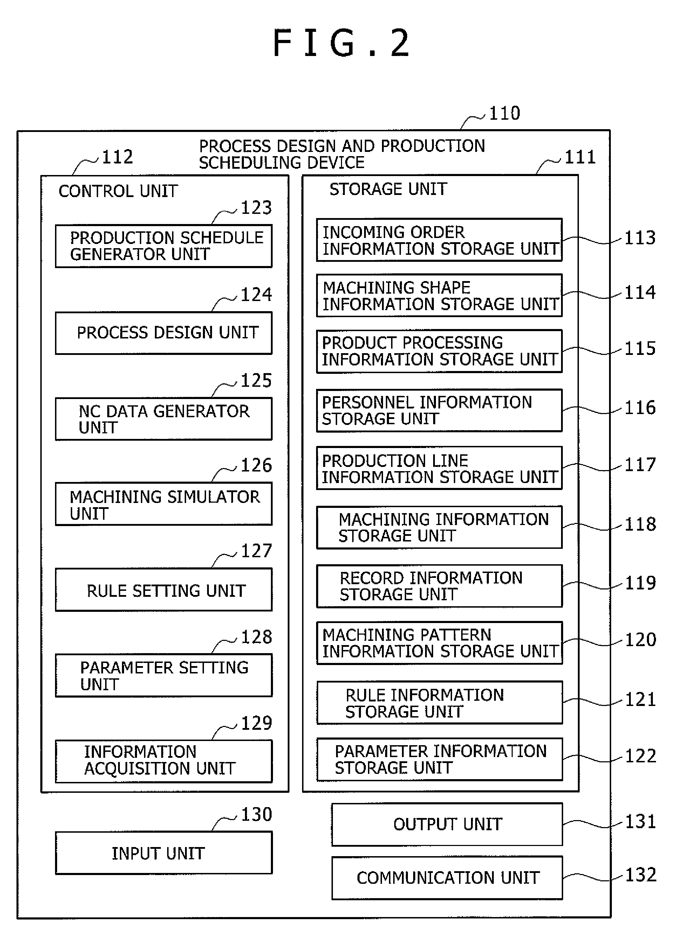

FIG. 2 is a concept drawing of the process design and production scheduling device 110. As shown in the figure, the process design and production scheduling device 110 includes a storage unit 111, a control unit 112, an input unit 130, an output unit 131, and a communication unit 132.

The storage unit 111 includes an incoming order information storage unit 113, a machining shape information storage unit 114, a product processing information storage unit 115, a personnel information storage unit 116, a production line information storage unit 117, a processing machine information storage unit 118, a record information storage unit 119, a machining pattern information storage unit 120, a rule information storage unit 121, and a parameter information storage unit 122.

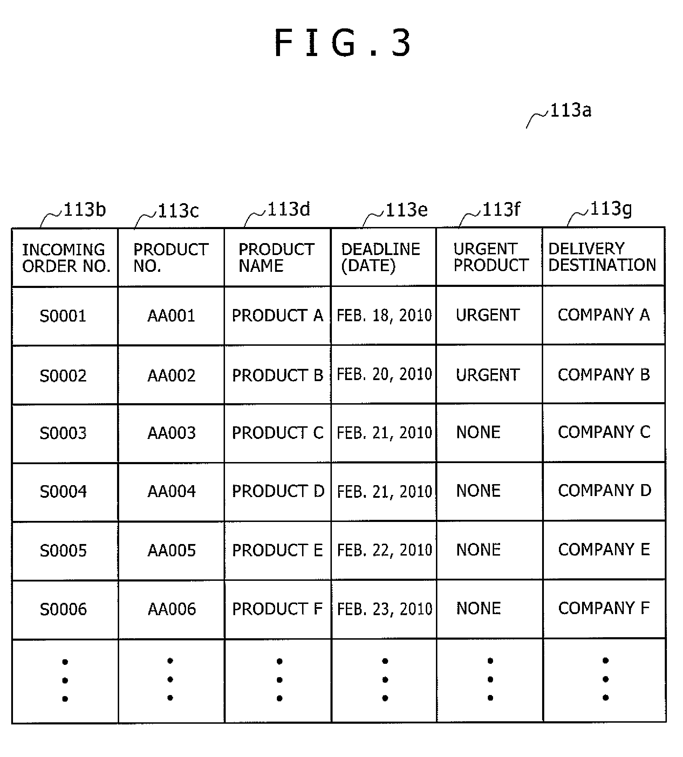

The incoming order information storage unit 113 stores incoming order information that specifies a deadline for each product. In the present embodiment, an incoming order information table 113a is for example stored as shown in FIG. 3 (concept view of incoming order information table 113a).

As shown in the figure, the incoming order information table 113a includes the fields of an incoming order No. 113b, a product No. 113c, a product name 113d, a deadline 113e, an urgent product 113f, and a delivery destination 113g.

The incoming order No. 113b stores identification information for uniquely identifying each incoming order. An incoming order No. is assigned a serial number when the order was received is stored here.

A product number serving as identification information for identifying the product whose order was received as specified in the incoming order No. 113b is stored in the product No. 113c (fields).

Information for identifying the product name of the product whose order was received as specified in the incoming order No. 113b is stored in the product name 113d.

Information for specifying the deadline of the product whose order was received as specified in the incoming order No. 113b is stored in the deadline (field) 113e.

Information for specifying the product for urgent production and whose order was received as specified in the incoming order No. 113b is stored in the urgent product 113f.

Information for specifying the delivery destination of the product whose order was received as specified in the incoming order No. 113b is stored in the delivery destination 113b.

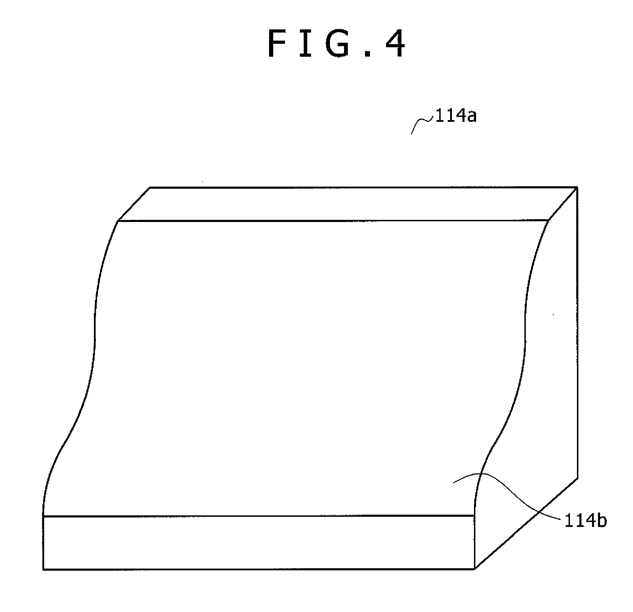

Referring now to FIG. 2, the machining shape of each product is stored in the machining shape information storage unit 114. In this embodiment, the machining shape information 114a is for example stored as shown in FIG. 4 (concept view of the machining shape information 114a). In the example in FIG. 4, the machining shape information 114a includes the finished surface 114b.

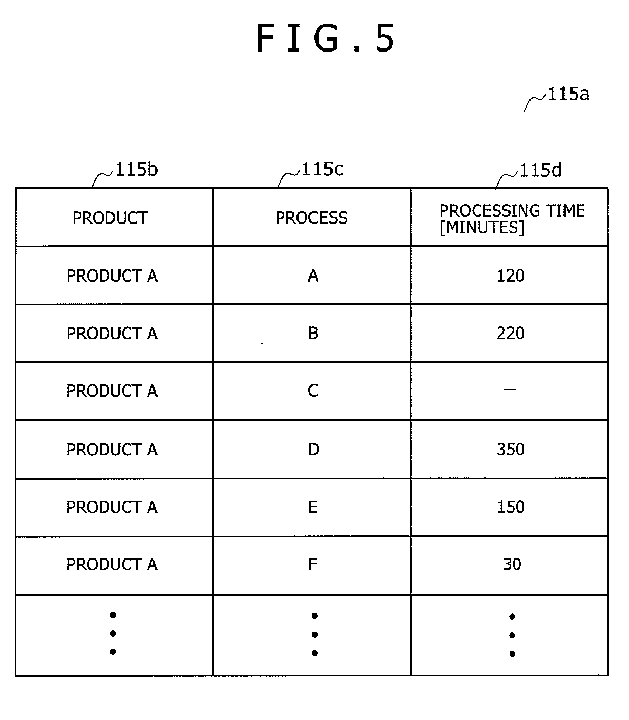

Referring again to FIG. 2, the processing time of the product in each process is stored in the product processing information storage unit 115. In this embodiment, the product processing information 115a is for example stored as shown in FIG. 5 (concept view of the product processing information 115a).

As shown in the figure, the product processing information table 115a includes the product 115b, the process 115c and the processing time 115d as shown in the figure.

Information for specifying the product name of the product is stored in the product 115b.

Information for specifying the process name in the production line is stored in the process 115c.

Information for specifying the processing time of the process specified in the process (field) 115c for the product specified in the product (field) 115b, is stored in the processing time (field) 115d. Moreover, the processing time in the machining process is determined by the processing machine and the machining process so information signifying that the information has not yet been set, is stored in the processing time (field) 115d by entering a symbol such as "-" in the processing time 115d that corresponds to the machining process.

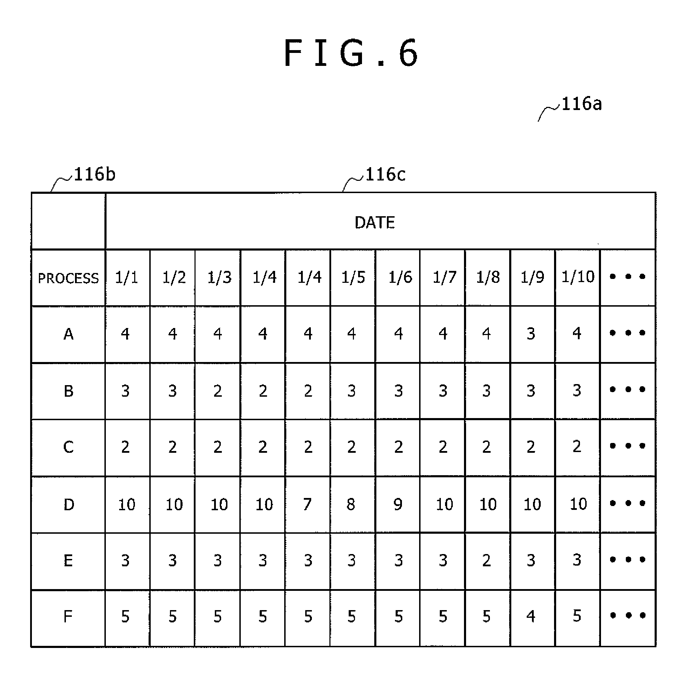

Referring again to FIG. 2, personnel information for each process on the production line is stored in the personnel information storage unit 116. In the present embodiment, the personnel information table 116a is for example stored as shown in FIG. 6 (concept view for the personnel information table 116a).

As shown in the figure, the personnel information table includes the fields of a process 116b, and a date 116c.

Information for specifying the process name on the production line is stored in the process (field) 116b.

Information for specifying the number of personnel working on the process at the date corresponding to the process specified in the process (field) 116b is stored in the date (field) 116c.

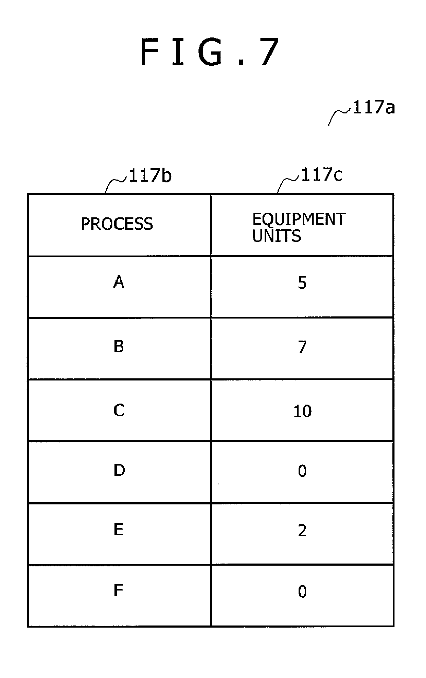

Referring again to FIG. 2, the device information for the production line is stored in the production line information storage unit 117. In the present embodiment, the production line information table 117a is for example stored as shown in FIG. 7 (concept view of the production line information 117a).

The production line information table includes the fields of a process 117b, and the equipment units 117c as shown in the figure.

Information for specifying the process name on the production line is stored in the process (field) 117b.

Information for specifying the number of devices in the process specified in the process (field) 117b is stored in the equipment units (field) 117c.

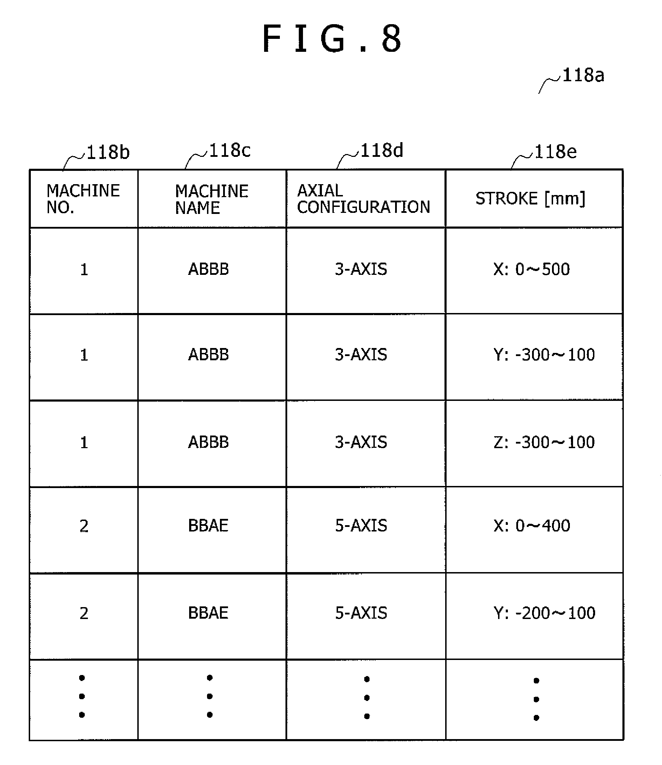

Referring again to FIG. 2, device information for the processing machines is stored in the processing machine information storage unit 118. In the present embodiment, the machining information table 118a is for example stored as shown in FIG. 8 (concept view of the machining information 118a).

The processing machine information table as shown in the figure includes a machine No. 118b, a machine name 118c, an axial configuration 118d, and a stroke 118e.

A machine No. serving as information for identifying a processing machine is stored in the machine No. 118b.

Information for specifying the processing machine name is stored in the machine name (field) 118c.

Information for specifying the axial configuration of the processing machine is stored in the axial configuration (field) 118d.

Information for specifying the stroke serving as the operating range on each axis of the processing machine is stored in the stroke (field) 118e.

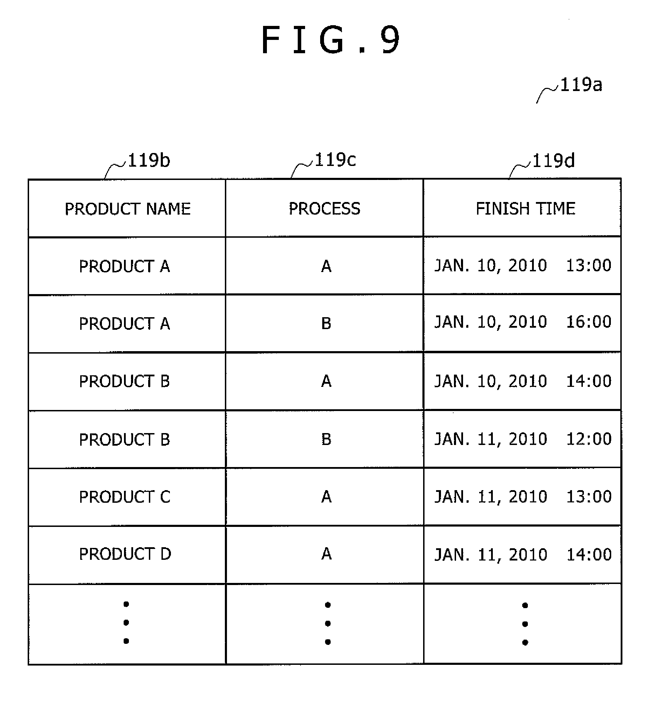

Referring again to FIG. 2, a record information table 119a such as shown in FIG. 9 (concept view of record information 119a) is stored in the record information storage unit 119.

Information for specifying the product name of the product is stored in the product name (field) 119b.

Information for specifying the process name on the production line is store in the process (field) 119c.

Information for specifying the finish time of the process specified in the process (field) 119c for the product specified in the product name (field) 119b is stored in the finish time (field) 119d.

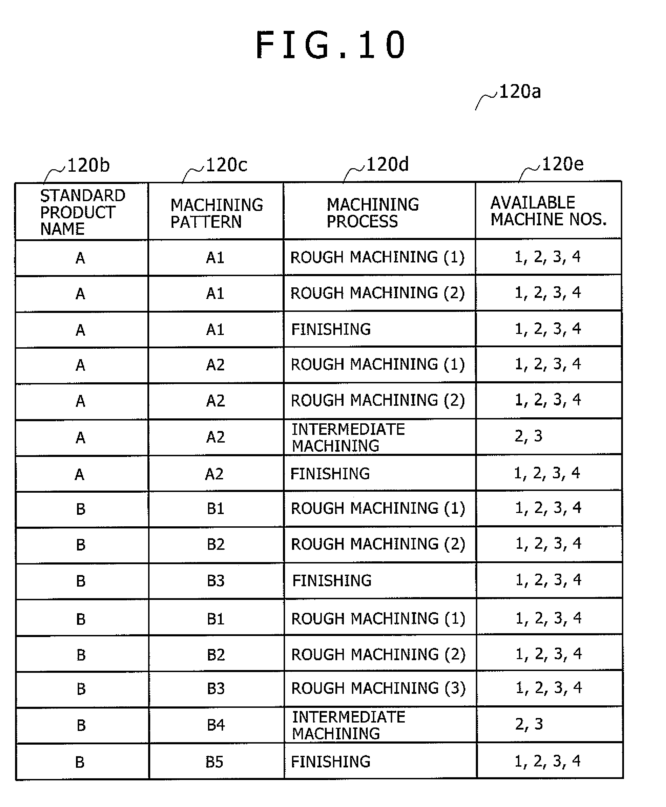

Referring again to FIG. 2, the machining pattern database information is stored in the machining pattern information storage unit 120. In the present embodiment, the machining pattern information table 120a is for example stored as shown in FIG. 10 (concept view of the machining pattern information 120a).

The machining pattern information table as shown in the figure includes the fields of a standard product name 120b, a machining pattern 120c, a machining process 120d, and available machine No. 120e. Information for specifying the product name of the standard product is stored in the standard product name (field) 120b.

Information for specifying the pattern name of the machining pattern for the product specified in the standard product name (field) 120b is stored in the machining pattern (field) 120c.

Information for specifying the machining process name in the machining pattern specified in the machining pattern (field) 120c for the product specified in the standard product name (field) 120b is stored in the machining process (field) 120d.

Information for specifying an available processing machine No. for the machining process specified in the machining process (field) 120d, in the machining pattern specified in the machining pattern (field) 120c for the product specified in the standard product name (field) 120b is stored in the available machine No. 120e.

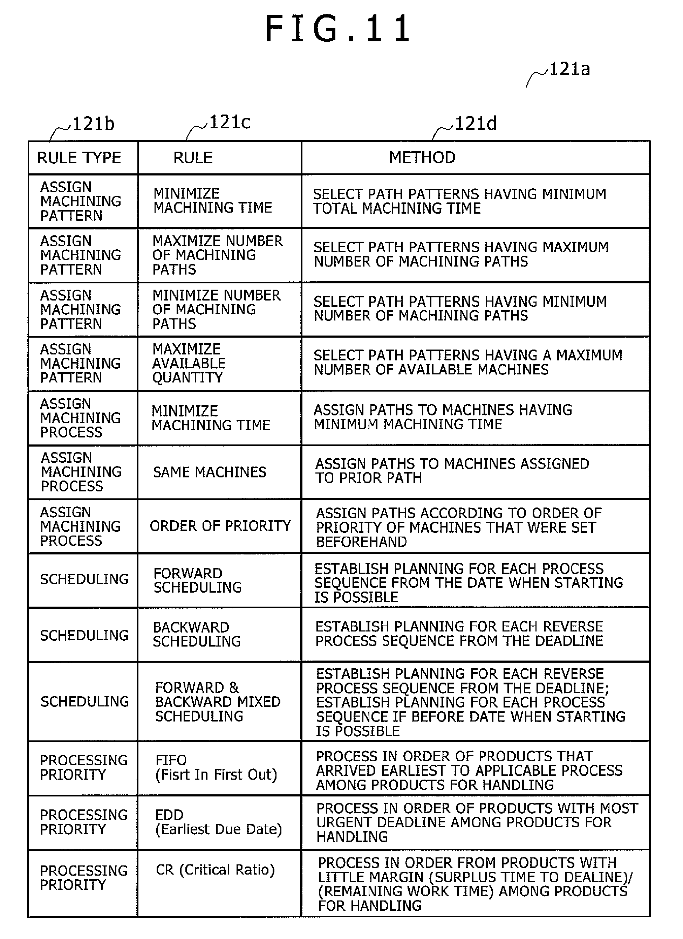

Referring again to FIG. 2, the rule information utilized when making the process design and production scheduling is stored in the rule information storage unit 121. In the present embodiment, the rule information table 121a is for example stored as shown in FIG. 11 (concept view of the rule information 121a).

As shown in the figure, the rule information table includes the fields of a rule type 121b, a rule 121c, and a method 121d.

Information for specifying the type of rule utilized in making the process design and production scheduling is stored in the rule type (field) 121b. In the present embodiment, the machining pattern assignment, machining process assignment, scheduling, and process priority are stored in the rule type (field) 121b. The machining pattern assignment is a rule utilized during process design. The machining process assignment, scheduling, and process priority is a rule utilized when making the production scheduling.

Information for specifying the rule utilized in the rule type specified in the rule type (field) 121b is stored in the rule (field) 121c.

Information for specifying the rule method utilized by the rule specified in the rule (field) 121c, for the rule type specified in the rule type (field) 121b is stored in the method (field) 121d.

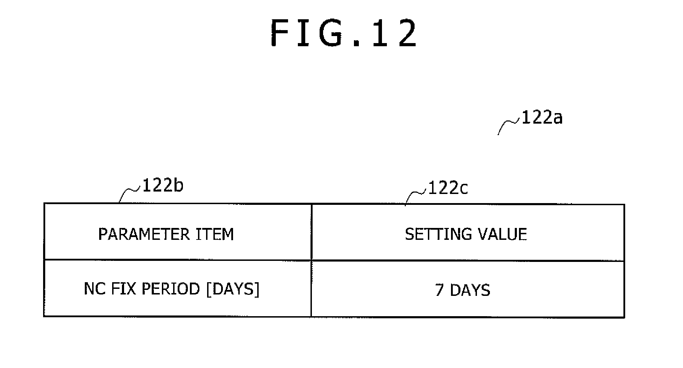

Referring again to FIG. 2, parameter information utilized for making the process design and production scheduling is stored in the parameter information storage unit 122. In the present embodiment, the parameter information table 122a is for example stored as shown in FIG. 12 (concept drawing of the parameter information 122a).

The parameter information table includes the fields of the parameter item 122b, and the setting value 122c as shown in the figure.

Information for specifying the parameter items utilized for making the process design and production scheduling is stored in the parameter item (field) 122b. In the present example, the NC fix period is stored as the parameter. The NC fix period signifies the fixing of NC data when making the production scheduling.

Information for specifying the parameter setting value for the parameter specified in the parameter item (field) 122b is stored in the setting value (field) 122c. In the present embodiment, the NC fix period serving as the parameter is stored as a 7 day setting value. In this case, the NC data made within seven days from the time of schedule planning is not rewritten during scheduling planning and the production schedule is formed from process time information for the machining process drawn up in the previous schedule.

The control unit 112 includes a production schedule generator unit 123, a process design unit 124, an NC data generator unit 125, a machining simulator unit 126, a rule setting unit 127, a parameter setting unit 128, and an information acquisition unit 129.

An input unit 130 receives the information that was input.

An output unit 131 outputs the information.

A communication unit 132 implements the sending and receiving of information by way of the network 190.

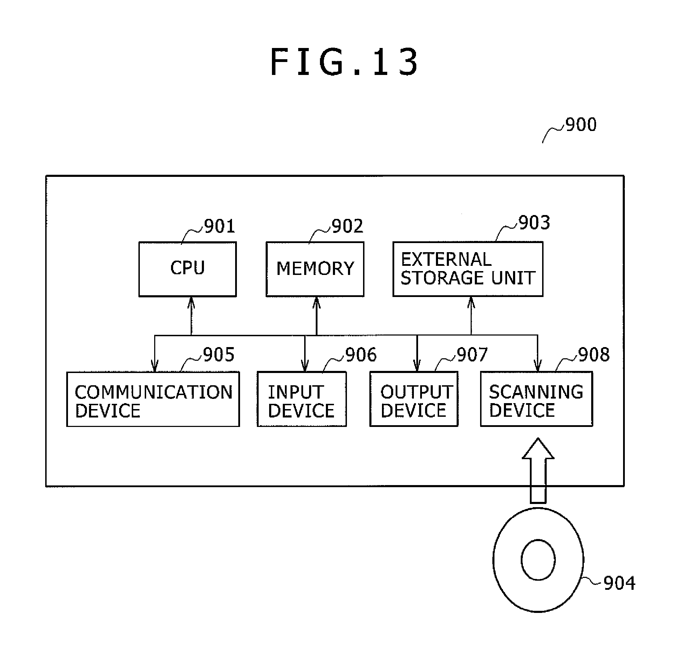

The above described process design and production scheduling device 110 may for example be implemented on a general-purpose computer 900 such as shown in FIG. 13 (concept view of the computer 900) including a CPU (Central Processing Unit) 901; a memory 902; an external storage device 903 such as a HDD (Hard Disk Drive); a scanner device 908 to read and write information on a portable storage medium 904 such as a CD (Compact Disk) or DVD (Digital Versatile Disk); an input device 906 such as a keyboard or mouse; an output device 907 such as a display; and a communication device 905 such as a NIC (Network Interface Card) for connecting to a communication network.

Referring again to FIG. 1, the incoming order receiving-processing device 140 receives an incoming order from a customer, and sends the received incoming order information to the process design and the production scheduling device 110 according to a request at the pre-established time or requests from the process design and production scheduling device 110.

The drawing design device 150 is utilized to design the drawing contours of the product from the customer specifications, and sends the designed product drawing information to the production scheduling device 110 according to a request at the pre-established time or a request from the process design and production scheduling device 110.

A production line management device 160 receives work record information entered by the user of each production device or production device installed on the production line, and sends the received work recording information to the process design and production scheduling device 110 according to a request at a pre-established time or a request from the process design and production scheduling device 110.

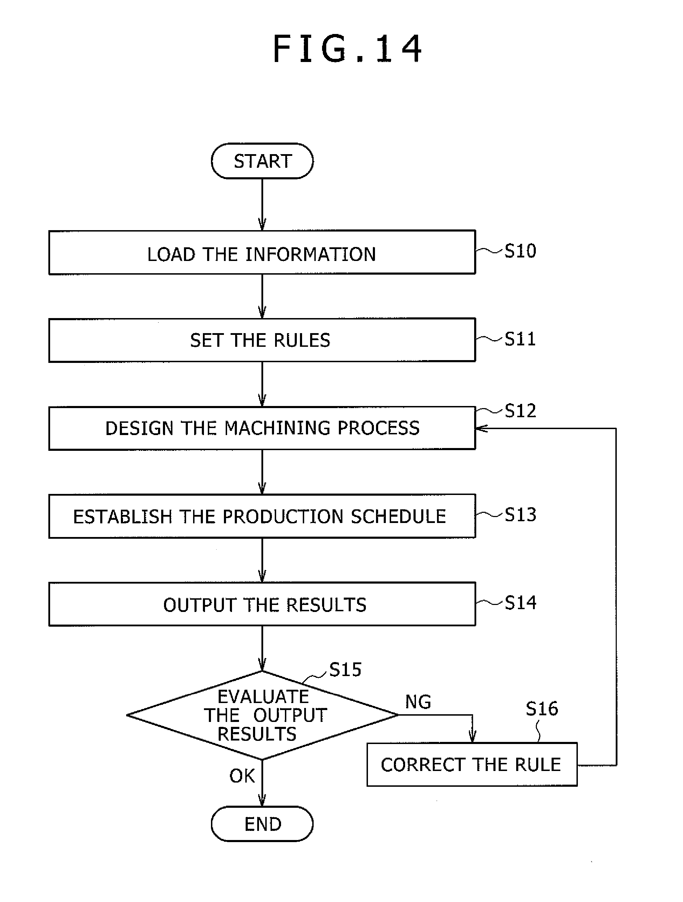

FIG. 14 is a flowchart showing the machining process for the product, and the process for creating the production scheduling for the product on the production line.

The information acquisition unit 129 first of all loads the information from the storage unit 111 (S10).

Next, the rule setting unit 127 sets the rules loaded from the storage unit 111 as the machining pattern assignment rule, scheduling rule, machining process assignment rule for process design and for drawing up the scheduling (S11).

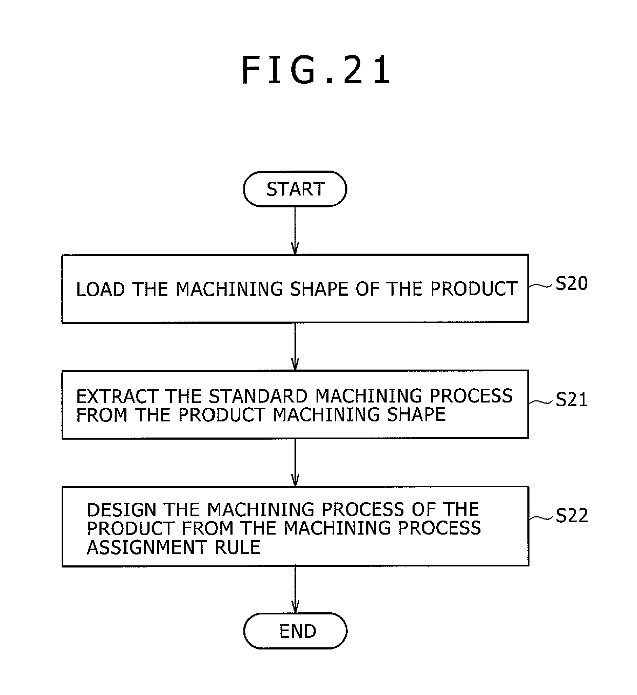

Next, the process design unit 124 designs the machining process for the product from the machining process assignment rules stored in the rule information storage unit 121 (S12). This step S12 is described in detail while referring to FIG. 21.

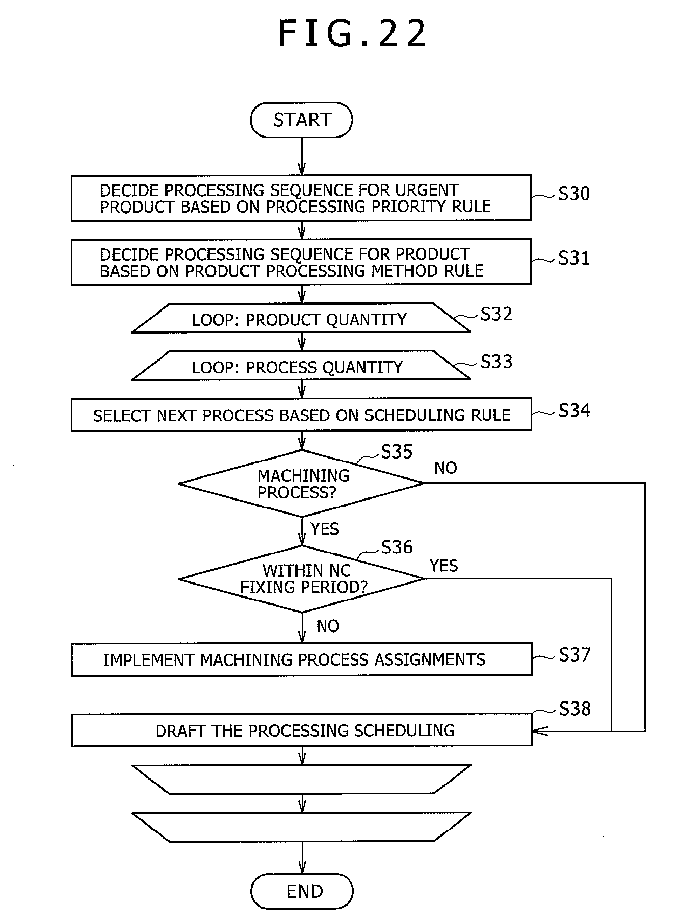

The production schedule generator unit 123 subsequently generates the production scheduling for the production line from the scheduling rule and processing machine assignment rule stored in the rule information storage unit 121 (S13). This step S13 is described in detail while referring to FIG. 22.

Next, the production schedule generator unit 123 outputs the created process design and production schedule results (S14).

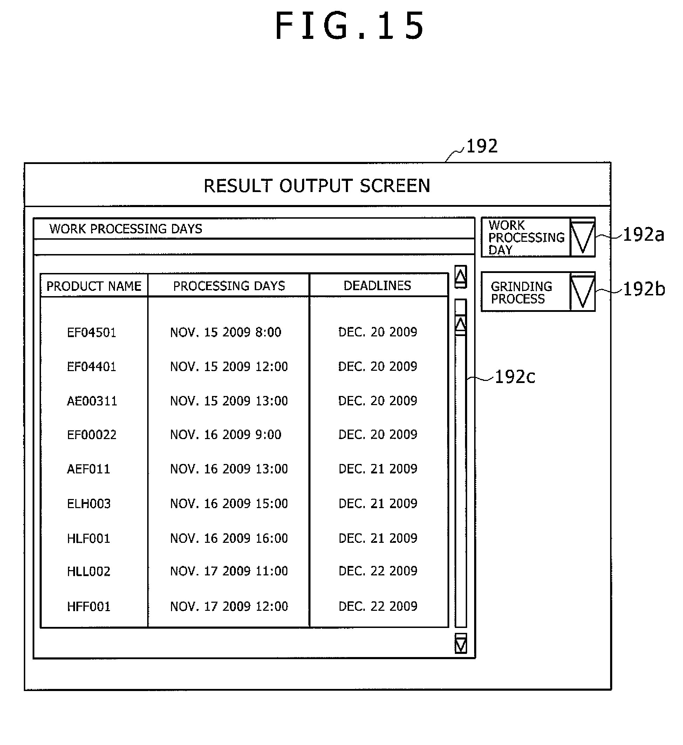

FIG. 15 is a concept drawing showing one example of the result output screen 192. The example in FIG. 15 is for the case where "Work processing day" was selected in the display selection region 192a described later on.

As shown in the figure, the display screen 192 includes a display selection region 192a, a process selection region 192b, and a work processing day display region 192c.

If "Work processing day" was selected in the display selection region 192a, selecting the process displayed in process selection region 192b for the work processing day, serves to display information for specifying the processing date of the product for the applicable process, along with information for specifying the product deadline in the work processing day display region 192c.

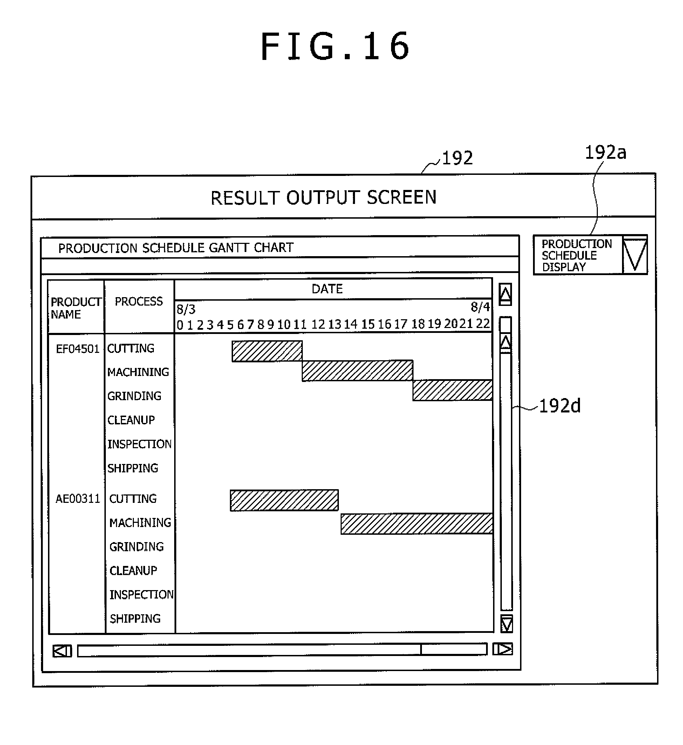

FIG. 16 is a concept drawing showing an example of the result output screen. The example in FIG. 16 shows the case where the "production scheduling display" was selected in the display selection region 192a.

The display screen 192 as shown in the figure includes a display selection region 192a, a production schedule Gantt chart display region 192d.

When "production scheduling display" was selected in display selection region 192a, information for specifying the processing date for the product for all processes by way of the Gantt chart method is displayed in the production schedule Gantt chart display region 192d.

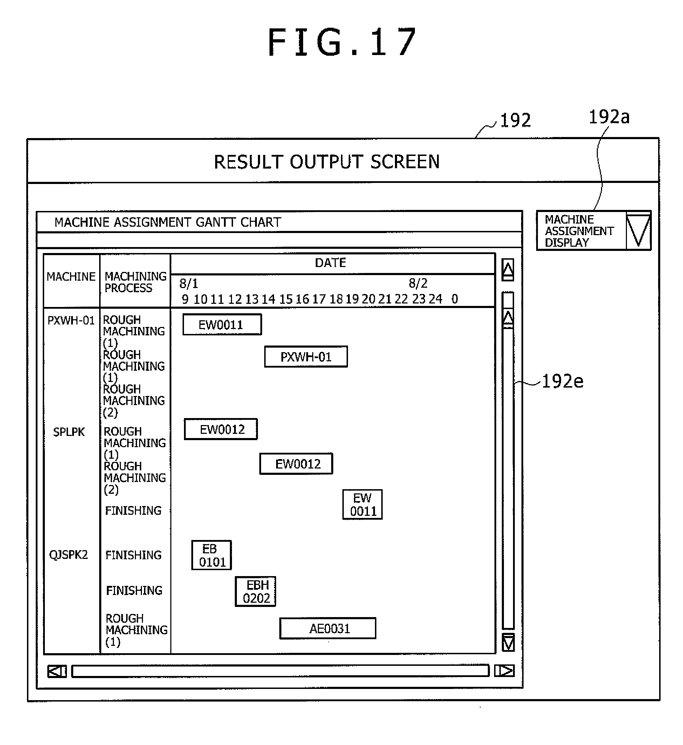

FIG. 17 is a concept drawing showing one example of the result output screen. The example in FIG. 17 shows the case where "processing machine assignment display" was selected in the display selection region 192a.

As shown in the figure, the display screen 192 includes a display selection region 192a, and a processing machine assignment Gantt chart display region 192e.

When "processing machine assignment display" was selected in the display selection region 192a, information for specifying the process date and the product for processing for each processing machine in the machining process is displayed in the processing machine assignment Gantt chart display region 192e.

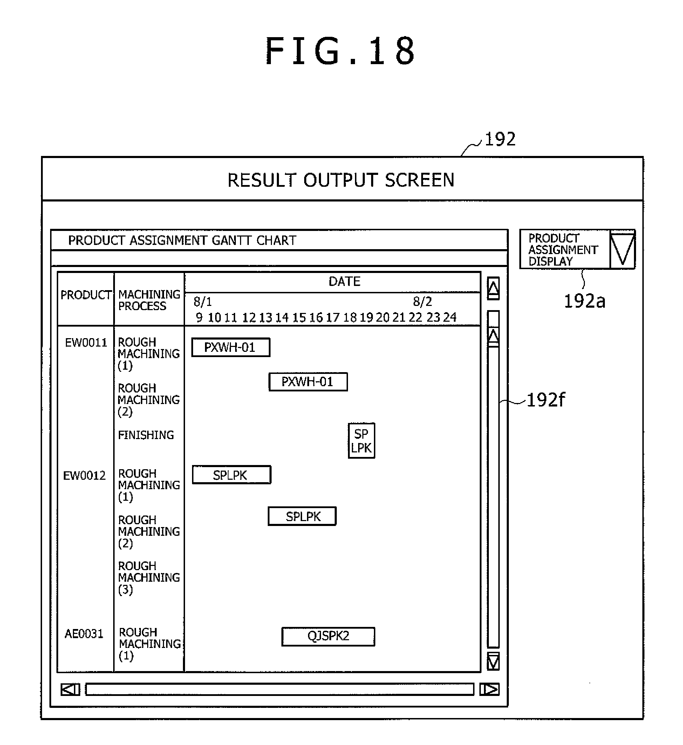

FIG. 18 is a concept drawing showing one example of the result output screen. The example in FIG. 18 shows the case where "product assignment display" was selected in the display selection region 192a.

As shown in the figure, the display screen 192 includes the display selection region 192a and the product assignment Gantt chart display region 192f.

When "product assignment display" was selected in the display selection region 192a, information for specifying the processing machine used in each product and the process date in the machining process by way of the Gantt chart method are display in the product assignment Gantt chart display region 192f.

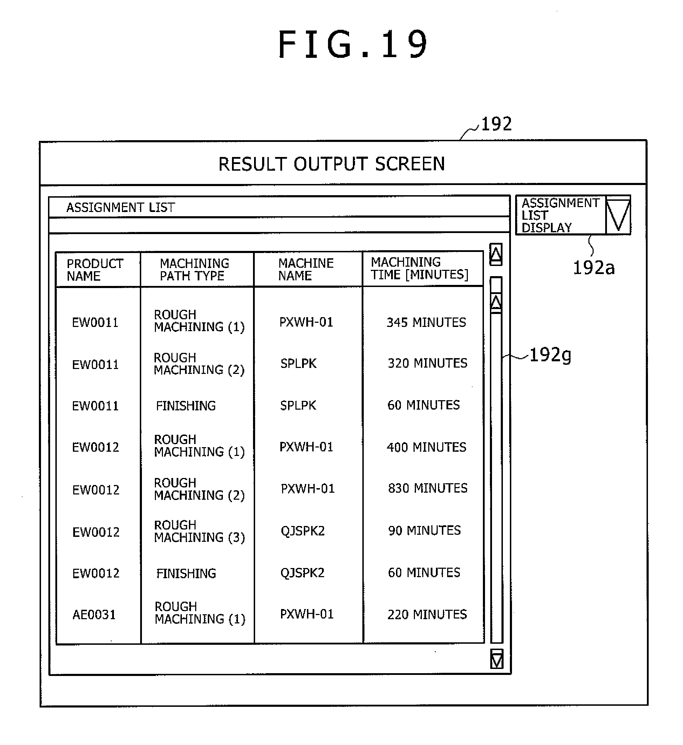

FIG. 19 is a concept drawing showing one example of the result output screen. The example in FIG. 19 shows the case where "assignment list display" was selected in the display selection region 192a.

As shown in the figure, the display screen 192 includes a display selection region 192a and an assignment list display region 192g.

When "assignment list display" was selected in the display selection region 192a, information for specifying the processing machines for processing in each machining process for each of the products is displayed along with information for specifying the processing time of the process, in the assignment list display region 192g.

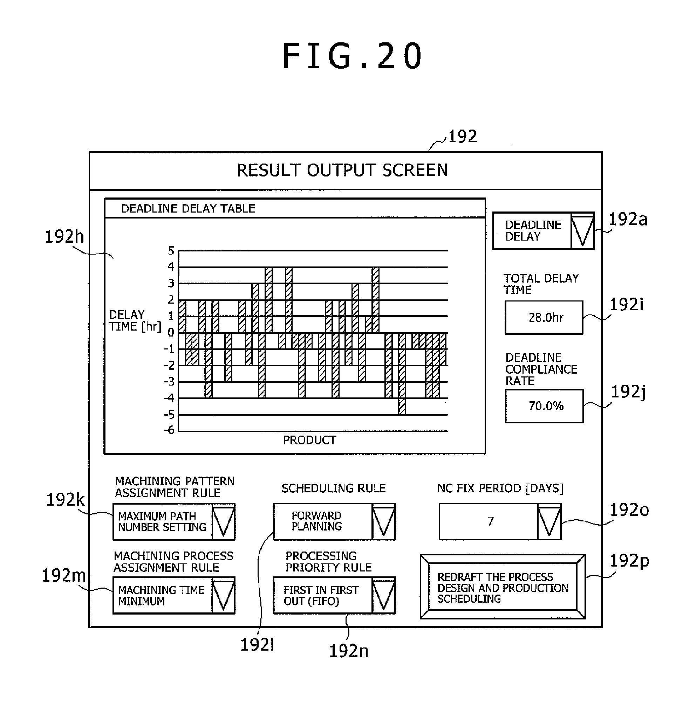

FIG. 20 is a concept drawing showing one example of the result output screen. The example in FIG. 20 shows the case where "deadline delay" was selected in the display selection region 192a. As shown in the figure, the display screen 192 is comprised of a display selection region 192a, a deadline delay display region 192h, a total delay time display region 192i, a deadline compliance rate display region 192j, a machining pattern assignment rule setting region 192k, a scheduling rule setting region 1921, and a machining process assignment rule setting region 192m, a processing priority rule setting region 192n, an NC fix period setting region 192o, and a process design and production scheduling redraft setting region 192p.

When "deadline delay" was selected in the display selection region 192a, information for specifying the delay time for each product deadline is displayed in the delay time display region 192h by way of a bar graph.

When "deadline delay" was selected in the display selection region 192a, information for specifying the cumulative delay time for all products is display in the total delay time display region 192i.

When "deadline delay" was selected in the display selection region 192a, information for specifying the average percentage (%) of deadline compliance rate for all products is displayed in the deadline compliance rate display region 192j.

When "deadline delay" was selected in the display selection region 192a, the currently selected machining pattern assignment rule can be reset by way of the machining pattern assignment rule setting region 192k.

When "deadline delay" was selected in the display selection region 192a, the currently selected scheduling rule can be reset by way of the scheduling rule setting region 1921.

When "deadline delay" was selected in the display selection region 192a, the currently selected machining process assignment rule can be reset by way of the machining process assignment rule setting region 192m.

When "deadline delay" was selected in the display selection region 192a, the currently selected processing priority rule can be reset by way of the processing priority rule setting region 192n.

When "deadline delay" was selected in the display selection region 192a, the setting value for the currently set NC fixed period can be reset by way of the NC fix period setting region 192o.

When "deadline delay" was selected in the display selection region 192a, the process design and production schedule can be remade by way of the process design and production scheduling redraft setting region 192p, based on the setting values of the NC fix period and reset rules that were reset by way of the machining pattern assignment rule setting region 192k, a scheduling rule setting region 1921, a machining process assignment rule setting region 192m, a process priority rule setting region 192n, and a NC fix period setting region 192o.

The process design and production scheduling device 110 user evaluates the drawing (or drafting) process design and production scheduling by way of this type of result output screen 192, and if the user's evaluation criteria are not satisfied, the user can reset the rules, and remake the process design and production scheduling.

Returning again to FIG. 14, the process design and production scheduling device 110 user checks the result output screen 192; and ends the uncorrected processing (OK in step S15) if the user's evaluation criteria are satisfied. If the user's evaluation criteria are not satisfied, the user proceeds to step S16 to perform corrections (NG in step S15).

In step S16, the control unit 112, receives the currently selected rule corrections stored in the rule information storage unit 121 by way of the input unit 130 from the process design and production scheduling device 110 user and returns to step S12 and repeats the processing.

FIG. 21 is a flow chart showing the process for designing the machining process in step S12 in FIG. 14. The process design unit 124 first of all loads the product machining shape information stored in the machining shape information storage unit 114 (S20).

Next, utilizing the product machining shape (or contours), the process design unit 124 extracts a machining process pattern prepared in a similar standard product from the machining pattern assignment rule stored in the rule information storage unit 121 (S21).

The process design unit 124 next designs the machining process for the product by selecting a machining process pattern based on the machining pattern assignment rule stored in the rule information storage unit 121 (S22).

FIG. 22 is a flow chart showing the process for making the production schedule in step S13 in FIG. 14.

First of all, the production schedule generator unit 123 establishes the processing sequence for the product for urgent production based on the urgent product information stored in the incoming order information storage unit 113 and the processing priority rule stored in the rule information storage unit 121 (S30).

Next, the production schedule generator unit 123 establishes the processing sequence for the product based on the process priority rule stored in the rule information storage unit 121, and inserts that processing sequence after the urgent product priority sequence (S31).

Next, the production schedule generator unit 123 repeats the processing steps S33 through S38 a number of times equal to all products, for drawing up scheduling for all products stored in the incoming order information storage unit 113 (S32).

Next, the production schedule generator unit 123 repeats the processing steps S34 through S38 a number of times equal to all processes in order to set the processing date (day/time) for all processes in the production lines for each product (S33).

The production schedule generator unit 123 next selects the process to implement processing based on the scheduling rule stored in the rule information storage unit (S34).

The production schedule generator unit 123 next proceeds to step S36 if the selected process is a machining process (YES in step S35), and proceeds to step S38 if the selected process is other than a machining process (NO in step S35).

The production schedule generator unit 123 next proceeds to step S37 if the setting value for the NC fixed period stored in the parameter information storage unit 122 is larger than the difference between the time set in the production schedule generator unit and the initial time in the drawn-up schedule (NO in step S36). The production schedule generator unit 123 proceeds to step S38 if the setting value for the NC fixed period stored in the parameter information storage unit 122 is equal to or smaller than the difference between the time set in the production schedule generator unit and the initial time in the drawn-up schedule (YES in step S36).

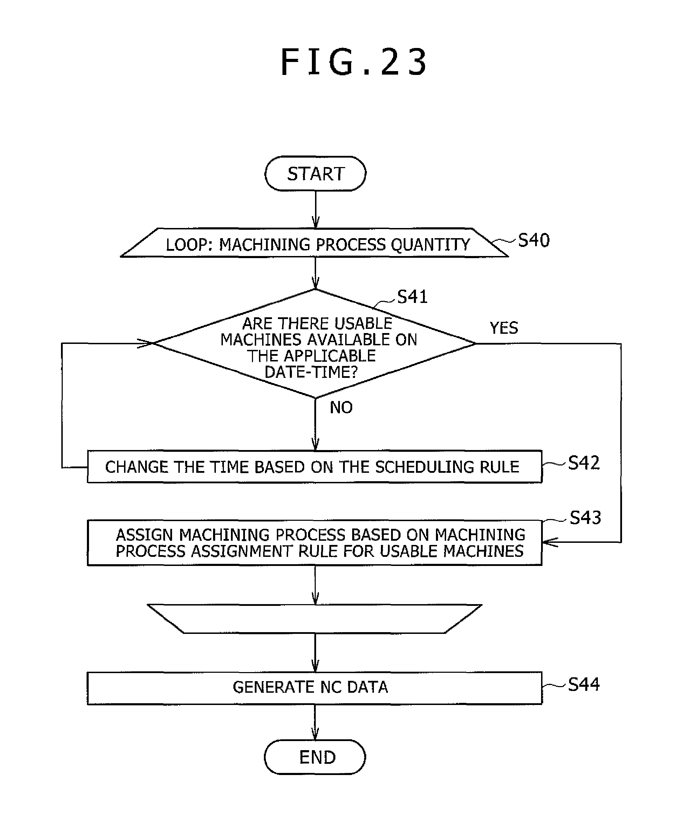

The production schedule generator unit 123 next generates the production scheduling for the machining process (step S37). The details of this step S37 are described while referring to FIG. 23.

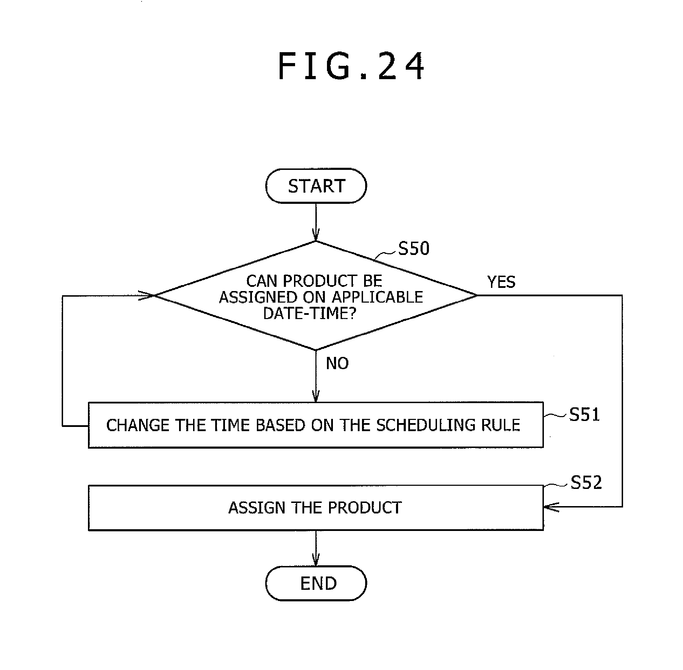

The production schedule generator unit 123 next generates the production scheduling for the process (step S38). The details of this step S38 are described while referring to FIG. 24.

FIG. 23 is a flow chart showing the process for making the production schedule for the machining process in step S37 in FIG. 22.

First of all, the production schedule generator unit 123 repeats the steps S41 through S43 a number of times equal to all processes stored in the product processing information storage unit 115 (S40).

Next, the production schedule generator unit 123 decides whether there are processing machines capable of assigning the applicable process for the applicable date and time. If there are assignable processing machines, the production schedule generator unit 123 proceeds to step S43 (YES in step S41); and if there are no assignable processing machines, proceeds step S42 (NO in step S41).

Next, the production schedule generator unit 123 sets the processing machines to assign the applicable process from among the assignable processing machines based on the machining process assignment rule stored in the rule information storage unit 121 and the machining time information that was approximately estimated by the machining simulator unit 126 (step S42).

The production schedule generator unit 123 next advances the currently time in time units based on the scheduling rule and returns to step S41 (S42).

The production schedule generator unit 123 next generates an NC program for controlling the processing machines, from the machining process and the assigned processing machines by way of the automatic programming system in the NC data generator unit 125 (S44).

FIG. 24 is a flow chart showing the process for generating the production scheduling in the process in step S38 in FIG. 22.

First of all, the production schedule generator unit 123 decides whether there are products that can be assigned in the applicable date, and if there are assignable products proceeds to step S52 (YES in step S50). If there are no assignable products then the production schedule generator unit 123 proceeds to step S51 (NO in step S50).

Next, the production schedule generator unit 123 advances the current time in time units based on the scheduling rule, and returns to step S50 (S51).

The embodiment as described above is capable of attaining the target production quantity, and complying with deadlines specified by the customer, and also creating process designs and production scheduling that maximizes the efficiency of the processing machine.

## Claims

1. A process design and production scheduling device that makes numerical control (NC) data for a processing machines and production scheduling for the target product on a machine tool production line, the device comprising:
a section that provides a user interface to present a selection menu for a machining pattern assignment rule, a machining process assignment rule, a scheduling rule, and a process priority rule; and a display selection menu for the process design and production scheduling results that were made; and
a section that accepts the rule selected by the user, distributes the machining processes for the target product to a plurality of processing machines, and executes the process design in machining process units in compliance with the machining pattern assignment rule; and
a section that executes the process for making the production scheduling in compliance with the machining process assignment rule, the scheduling rule, and the process priority rule.

2. The process design and production scheduling device according to claim 1,
wherein processing is performed to output the processing machine assigned to each machining process for the product, the processing start time, and processing time; from the created process design and production scheduling, to the output section.

3. The process design and production scheduling device according to claim 1,
wherein processing is performed to output the process design, production scheduling, and NC data to the output section.

4. The process design and production scheduling device according to claim 1,
wherein processing to make the process design and production scheduling is implemented in compliance with rules set in advance for making the process design and production scheduling.

5. The process design and production scheduling device according to claim 1,
wherein the production design and production scheduling device remakes the process design and production scheduling when the input for correcting the rules for generating the process design and production scheduling are received by way of the input unit.
